# EUROPÄISCHE PATENTSCHRIFT

(11) **EP 2 396 141 B1**
(45) Veröffentlichungstag und Bekanntmachung des Hinweises auf die Patenterteilung: **08.04.2015**
(21) Anmeldenummer: 10722529.4
(22) Anmeldetag: 12.02.2010
(51) Int. Cl.: B23Q 1/28, F16D 63/00, F16D 65/14, F16C 29/10

(54) **REIBGEHEMME MIT QUERLIEGENDEM KÄFIG**
FRICTIONAL LOCK HAVING A TRANSVERSE CAGE
DISPOSITIF D'ARRÊT À FRICTION AVEC CAGE TRANSVERSALE

(30) Priorität: 13.02.2009 DE 102009008815
(43) Veröffentlichungstag der Anmeldung: 21.12.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2010/000167
(87) Internationale Veröffentlichungsnummer: WO 2010/091672

(56) Entgegenhaltungen:
- EP-A2- 1 605 174
- DE-A1-102004 060 109
- DE-U1- 20 202 803

## Beschreibung

Die Erfindung betrifft eine Brems- und/oder Klemmvorrichtung zur Anbringung an einem mittels mindestens einer Führungsschiene geführten Schlitten, wobei die Vorrichtung mindestens ein über ein Schiebekeilgetriebe betätigbares Reibgehemme umfasst, das wenigstens ein in einem Gehäuse gelagertes, an die Führungsschiene anpressbares Druckstück aufweist, wobei das Schiebekeilgetriebe zur Belastung des Reibgehemmes mittels Federkraft und/oder pneumatischer oder hydraulischer Druckkraft in eine Richtung und zur Entlastung mittels der pneumatischen oder hydraulischen Druckkraft von mindestens einem Kolben in die entgegengesetzte Richtung bewegt wird, wobei der oder die Kolben in mindestens einer mehrstufigen Durchgangsbohrung angeordnet sind, deren Mittellinie parallel zur Führungslängsrichtung orientiert ist, wobei der Schiebekeil des Schiebekeilgetriebes über mindestens einen Wälzkörper auf das Druckstück wirkt und wobei der oder die Wälzkörper in einem - in der Führungslängsrichtung des oder der Kolben verschiebbaren - Käfig gelagert sind.

Aus der DE 102 07 605 C1 und der DE 200 02 915 U1 ist eine derartige Brems- und/oder Klemmvorrichtung bekannt. Bei diesem Gegenstand fluchtet der Käfig, der u.a. die Wälzkörper des Schiebekeilgetriebes lagert, mit mindestens einer z.B. pneumatisch angetriebenen Zylinder-Kolben-Einheit. Zugleich muss er über die Zylinderführungsbohrung mindestens einer Zylinder-Kolben-Einheit montiert werden.

Aus der US 2005/0183907 A1 ist eine Brems- und/oder Klemmvorrichtung bekannt, bei der die Kraft zweier vorrichtungsseitiger Antriebe mit Hilfe zweier einander gegenüberliegender Keilgetriebe in eine auf eine Führungsschiene wirkende Klemmkraft umgelenkt wird. Jedes Keilgetriebe hat einen Schiebekeil, der an jeder Abstützflanke je zwei Kugellager trägt. Der einzelne Schiebekeil ist in einem Schlitz des jeweiligen Druckstücks geführt.

Der vorliegenden Erfindung liegt die Problemstellung zugrunde, eine Brems- und/oder Klemmvorrichtung zu entwickeln, die bei großer Klemmkraft, trotz hoher Formsteifigkeit, einen geringen Bauraumbedarf und eine geringe Eigenmasse hat. Zudem soll sie bei wartungsarmer, einfacher und sicherer Handhabung die Bremsund Klemmkräfte reaktionsschnell und nahezu verschleißfrei freisetzen.

Diese Problemstellung wird mit den Merkmalen des Hauptanspruchs gelöst. Dazu ist der Käfig in eine quer zur Führungslängsrichtung ausgerichteten Gehäusebohrung - durch Einschieben in diese - montierbar, die von einer Verbindungsbohrung, die Teil der Durchgangsbohrung ist, geschnitten oder gekreuzt wird. Die Verbindungsbohrung hat einen Durchmesser, der kleiner ist als 30% des Durchmessers einer Federspeicherbohrung, die Teil der Durchgangsbohrung ist.

Die einzelne Brems- und/oder Klemmvorrichtung umfasst mindestens ein Reibgehemme und mindestens ein z.B. zweidimensionales ebenes Schiebekeilgetriebe. Das einzelne Reibgehemme wirkt über ein Druckstück auf eine Führungsschiene, auf der ein Maschinen- oder Messgeräteschlitten gelagert und geführt ist, der diese Vorrichtung trägt. Das einzelne Reibgehemme entwickelt seine Brems- und Klemmwirkung durch das Freisetzen von in einem Federspeicher gespeicherter Federenergie, die über das Schiebekeilgetriebe auf das jeweilige Druckstück übertragen wird. Konstruktiv wird der jeweilige Käfig quer zur Führungslängsrichtung und parallel zur Klemmrichtung in die Bohrung eingesetzt, in die auch das entsprechende Druckstück montiert ist. Durch diese Bauteilausrichtung ist es möglich, den im Käfig sitzenden Schiebekeil durch Gehäusebohrungen hindurch zu bewegen, deren Durchmesser nur geringfügig größer ist als der jeweilige Außendurchmesser der den Schiebekeil gerade verschiebenden Kolbenstange.

In den dargestellten Ausführungsbeispielen werden pro Gehäuseseite der Vorrichtung jeweils ein Schiebekeilgetriebe für ein Reibgehemme verwendet. Jeder Schiebekeil wird durch drei pneumatisch betätigte Kolben gegen die Wirkung eines Federspeichers in einer Position gehalten, bei der die Druckstücke oder Reibbeläge nicht an der Führungsschiene anliegen. Die Kolbenanzahl kann je nach dem erforderlichen Bremskraftbedarf vergrößert oder auch verkleinert werden. Es ist auch möglich, pro Gehäuseseite zwei oder mehr Schiebekeilgetriebe hintereinander anzuordnen, die dann jeweils auf ein Reibgehemme wirken. Hierbei kann die Anzahl der bisher benutzten Kolben konstant bleiben oder geändert werden.

Die Führungsschienen, an denen die Druckstücke zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.

Weitere Einzelheiten der Erfindung ergeben sich aus den Unteransprüchen und den nachfolgenden Beschreibungen schematisch dargestellter Ausführungsformen.
- Figur 1:: Teilweise geschnittene Darstellung der Vorrichtung;
- Figur 2:: Frontansicht der Vorrichtung mit Führungsschiene;
- Figur 3:: Teillängsschnitt zu Figur 2;
- Figur 4:: Schiebekeilgetriebe bei betätigtem Reibgehemme;
- Figur 5:: Schiebekeilgetriebe bei unbetätigtem Reibgehemme;
- Figur 6:: Perspektivischer Ausschnitt des Schiebekeilgetriebes bei betätigtem Reibgehemme;
- Figur 7:: wie Figur 4, jedoch bei unbetätigtem Reibgehemme;
- Figur 8:: Perspektivische Seitenansicht des Käfigs;
- Figur 9:: Perspektivische Frontansicht des Käfigs;
- Figur 10:: Perspektivische Rückansicht des Käfigs;
- Figur 11:: vergrößerter Teillängsschnitt zu Figur 3;
- Figur 12:: Schiebekeilgetriebe mit symmetrischem Schiebekeil.

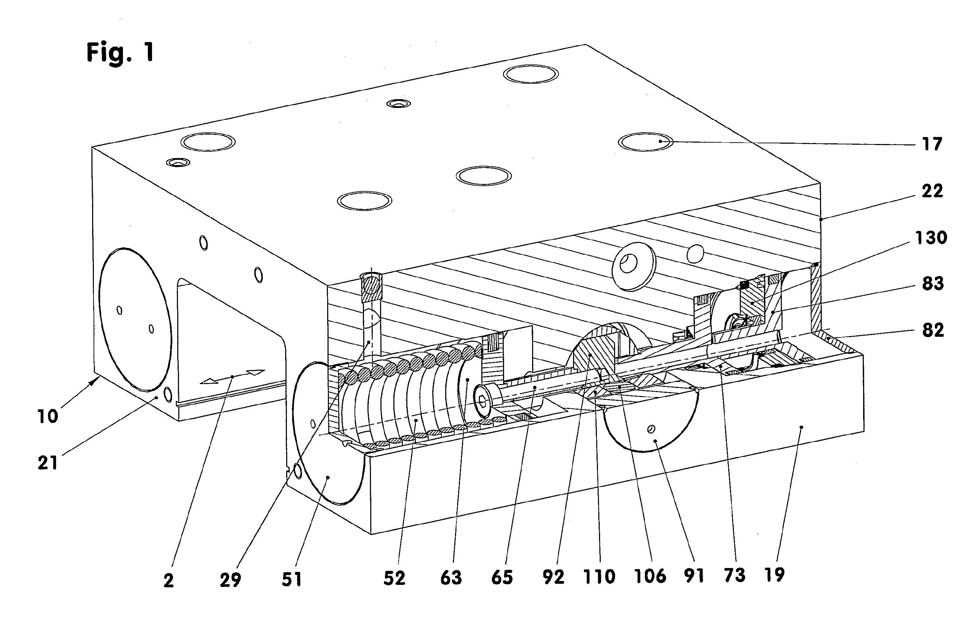

Die Figur 1 zeigt eine Brems- und/oder Klemmvorrichtung, wie sie beispielsweise in vielen Horizontal- oder Vertikalschlitten u.a. in Werkzeug- und Messmaschinen verwendet wird. Die Vorrichtung ist hierbei an einem entsprechenden Geräteschlitten (9) so angeordnet, dass sie die - die Schlittenlängsrichtung vorgebende - Führungsschiene (1) z.B. mit jeweils zwei Reibgehemmen (90) umgreift. Auf jedes Reibgehemme (90) wirkt ein Schiebekeil (92), der hier über mindestens einen Federspeicherantrieb (50) belastet und über mindestens einen pneumatischen Antrieb (70, 80) entlastet wird.

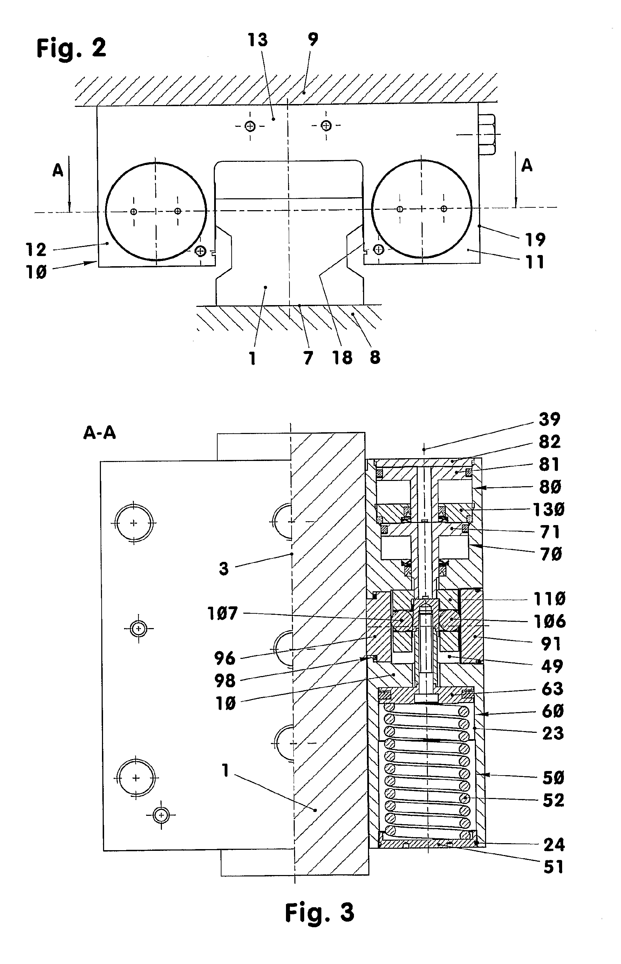

In den Figuren 2 und 3 ist ein Abschnitt einer doppelprismatischen Führungsschiene (1) dargestellt. Die Führungsschiene (1) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche (7) z.B. das sie tragende Maschinenbett (8).

Die Führungsschiene (1) wird von einem Gehäuse (10) beidseitig umgriffen. Im Gehäuse (10) sind zwei gegeneinander Brems- und Klemmkräfte erzeugende Vorrichtungen integriert. Das im Prinzip c-förmige Gehäuse (10) besteht aus einem Quader, der quer zu seiner Längsausdehnung eine Umgriffsnut (14) aufweist, die einen rechteckförmigen Querschnitt hat. In dem durch die Nut (14) entstandenen Freiraum ist die Führungsschiene (1) platziert. Die Nutbreite ist z.B. geringfügig breiter als die Führungsschienenbreite in dem vom Gehäuse (10) umgriffenen Bereich.

Das Gehäuse (10) hat z.B. gemäß Figur 2 - quer zur Führungslängsrichtung (2) - eine Gesamtbreite, die ca. die dreifache Breite der Führungsschiene ausmacht. Die Gesamthöhe des Gehäuses (10) beträgt z.B. 150% der Führungsschienenhöhe. Die Länge des Gehäuses (10) - in der Zeichnungsebene von Figur 3 gemessen - entspricht beispielsweise der Gehäusebreite.

Das Gehäuse (10) hat eine rechte (11) und eine linke Gehäusezone (12). Beide Zonen (11, 12) befinden sich unterhalb einer Flanschzone (13). Jede Gehäusezone (11, 12) weist eine mehrstufige Durchgangsbohrung (23, 34, 77, 87) auf, deren Mittellinie (39) parallel zur Führungslängsrichtung (2) orientiert ist, vgl. Figur 3. Die Durchgangsbohrung setzt sich aus einer Federspeicherbohrung (23), einer Verbindungsbohrung (34), einer inneren Zylinderflächenbohrung (77) und einer äußeren Zylinderflächenbohrung (87) zusammen.

Im Bereich der Öffnung der Federspeicherbohrung (23) befindet sich im Bereich der Stirnseite (21) des Gehäuses (10) ein Feingewinde und eine einen dichtenden Quetschring (24) aufnehmende Nut. Der Grund der Federspeicherbohrung (23) ist plan. Im Zentrum des Grundes setzt sich die Durchgangsbohrung (23, 34, 77, 87) als Verbindungsbohrung (34) fort. Der Durchmesser der Verbindungsbohrung (34) beträgt weniger als 30 % der Federspeicherbohrung (23). Hinter der Verbindungsbohrung (34) liegt der Zylinder einer inneren Zylinder-Kolben-Einheit (70) und der Zylinder einer äußeren Zylinder-Kolben-Einheit (80). Die Zylinderflächenbohrung (77) der inneren Zylinder-Kolben-Einheit (70) hat einen Durchmesser, der ca. 80% des Durchmessers der Federspeicherbohrung (23) entspricht. Der Durchmesser der Zylinderflächenbohrung (87) der äußeren Zylinder-Kolben-Einheit (80), sie endet in der Stirnfläche (22) des Gehäuses (10), entspricht dem Durchmesser der Federspeicherbohrung (23).

Die Verbindungsbohrung (34) wird im mittleren Bereich der von einer - einen Keilgetrieberaum (49) begrenzenden - Gehemmebohrung (41) geschnitten oder gekreuzt. Letztere ist quer zur Mittellinie (39) orientiert. Sie verbindet als mehrfach abgestufte Durchgangsbohrung die seitliche Außenwandung (19) mit der nächstgelegenen Innenwandung (18) der Umgriffsnut (14). Sie besteht aus einer Hauptbohrung (42), einer Druckstückführungsbohrung (44) und einer Austrittsbohrung (45). Die Hauptbohrung, deren Durchmesser hier z.B. 77% des Durchmessers der Federspeicherbohrung (23) beträgt, weist in ihrem äußeren Endbereich ein Feingewinde (43) zur Aufnahme einer Einstellschraube (91) auf.

Die Einstellschraube (91) ist eine zylindrische Scheibe, die an der äußeren Stirnfläche Bohrungen für den Eingriff eines Zapfenschlüssels aufweist. Sie hat ein Außengewinde, das in einer Ringnut endet. In der Nut ist ein Quetschring als Schraubensicherung und Dichtung eingelassen.

Die Druckstückführungsbohrung (44) und die im Durchmesser kleinere Austrittsbohrung lagern das Druckstück (96).

Das Druckstück (96) ist ein zylindrischer Kolben mit einer angeformten Kolbenstange. Die Kolbenstange ragt bei betätigtem Reibgehemme (90) aus der Austrittsbohrung (45) heraus. Am Übergang der Kolbenstange zum Kolben befindet sich eine Stirnnut, in der ein elastischer Rückhubring (98) mit z.B. rechteckigem Einzelquerschnitt sitzt. Die außenseitige Stirnfläche des Druckstückes (96) - sie ragt in die Umgriffsnut (14) hinein - ist z.B. plan ausgeführt und normal zur Mittellinie (46) orientiert. Ggf. trägt die Stirnfläche einen eingearbeiteten oder aufgetragenen Reibbelag. Auch kann der Reibbelag auf einer separat am Gehäuse (10) gelagerten Reibbacke angeordnet sein, vgl. DE 102 07 605 C1.

Die innenseitige Stirnfläche (97) ist ebenfalls plan gestaltet. Nach den Ausführungsbeispielen ist sie normal zur Mittellinie (46) ausgerichtet. Alternativ kann die innenliegende Stirnfläche (97) gegenüber der Mittellinie (39) einen Winkel z.B. zwischen 0,5 und 5 Winkelgraden einnehmen. Dabei ist die Stirnflächennormale in Richtung der Schraubendruckfeder (52) oder eines dort positionierten Federsystems geneigt.

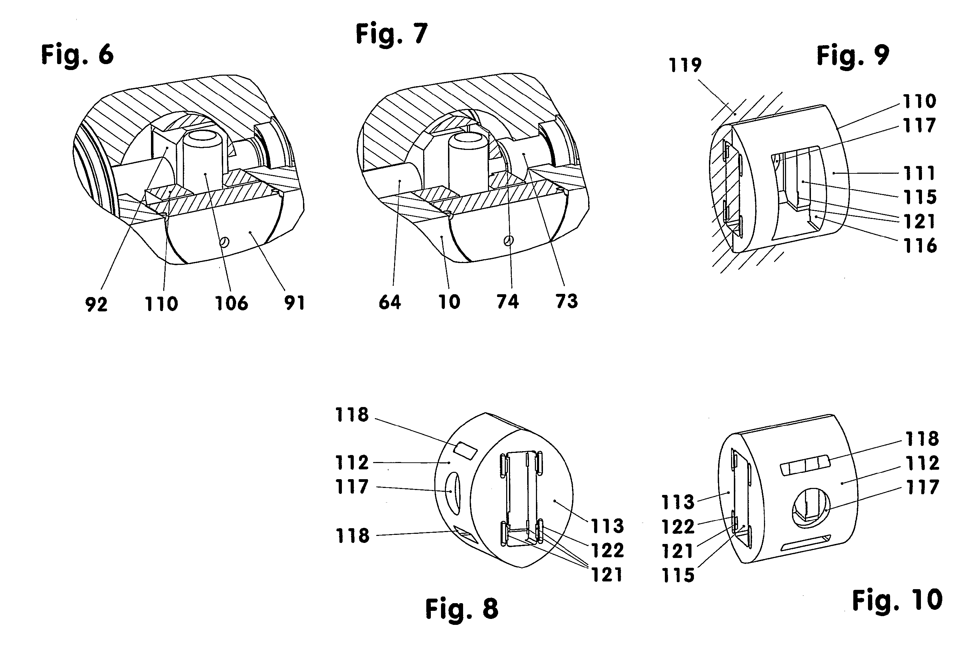

Zwischen dem Druckstück (96) und der Einstellschraube (91) sitzt der beispielsweise aus Polyoxymethylen (POM) gefertigte Käfig (110), vgl. u.a. Figuren 6 bis 10. Der Käfig (110) ist beispielweise ein Raumkörper, der aus zwei aneinander geformten gleichgroßen Zylinderteilstücken besteht. Jedes Zylinderteilstück hat den Querschnitt eines Kreisabschnittes, dessen Bogenhöhe kleiner ist als der des Kreisradius. Die Differenz zwischen der Bogenhöhe und dem Kreisradius entspricht dem halben maximalen Hub des Käfigs (110). Ggf. ist die Differenz bis zu 10% größer als der halbe maximale Hub. Die gedachte zwischen den Zylinderteilstücken gelegene Kontaktebene wird als Käfigmittenlängsebene (119) bezeichnet.

Ggf. kann diese Kontaktebene bzw. Käfigmittenlängsebene (119) auch eine Montagefuge sein, an der die Zylinderteilstücke als zwei getrennt gefertigte Bauteile mit oder ohne separate Befestigungsmittel über Form-, Kraft und/oder Stoffschluss miteinander verbunden werden, z.B. durch Verrasten, Verkleben, Verschrauben, Vernieten oder dergleichen.

Parallel zur Käfigmittenlängsebene (119) hat der Käfig (110) einen Durchgangskanal (115) mit einem zumindest annähernd rechteckigen Querschnitt. Der Durchgangskanal (115) wird durch die Käfigmittenlängsebene (119) halbiert.

Quer zur Käfigmittenlängsebene (119) hat der Käfig (110) eine Schiebekeilausnehmung (116) mit einem ebenfalls zumindest annähernd rechteckigen Querschnitt. Die Schiebekeilausnehmung (116) ist von der Frontseite (111) aus in den Käfig (110) eingearbeitet, vgl. Figur 9. Sie erstreckt sich so weit in das Innere des Käfigs (110), dass sie die Rückseite des Käfigs an zwei Stellen durchdringt. Dort entstehen hierdurch die zumindest annähernd rechteckigen Fenster (118). Zwischen den Fenstern (118) befindet sich eine Querbohrung (117), die normal zur Käfigmittenlängsebene (119) orientiert ist und beispielsweise mittig auf die Schiebekeilausnehmung (116) trifft. Die Schiebekeilausnehmung (116) und der Durchgangskanal (115) haben beispielsweise die gleiche Höhe.

In den äußeren Bereichen des Durchgangskanals (115) sitzt jeweils als Wälzkörper (106, 107) eine Zylinderrolle, vgl. Figuren 6 und 7. Beide Zylinderrollen (106, 107) liegen an einem Schiebekeil (92) eines Schiebekeilgetriebes an. Der Schiebekeil (92) lagert dazu in der Schiebekeilausnehmung (116). Die außen liegende Zylinderrolle (106) stützt sich an einer Einstellschraube (91) ab, während die innen liegende Zylinderrolle (107) an einem hier unbelasteten Druckstück (96) anliegt. Wird z.B. ein Druckstück (96) verwendet, dessen innen liegende Planfläche gegenüber der Mittellinie (39) geneigt ist, werden zwischen dem Schiebekeil (92) und dem Druckstück (96) mindestens zwei Zylinderrollen (107) platziert. Hier werden dann auch zwischen dem Schiebekeil (92) und der Einstellschraube (91) mindestens zwei Zylinderrollen (106) angeordnet.

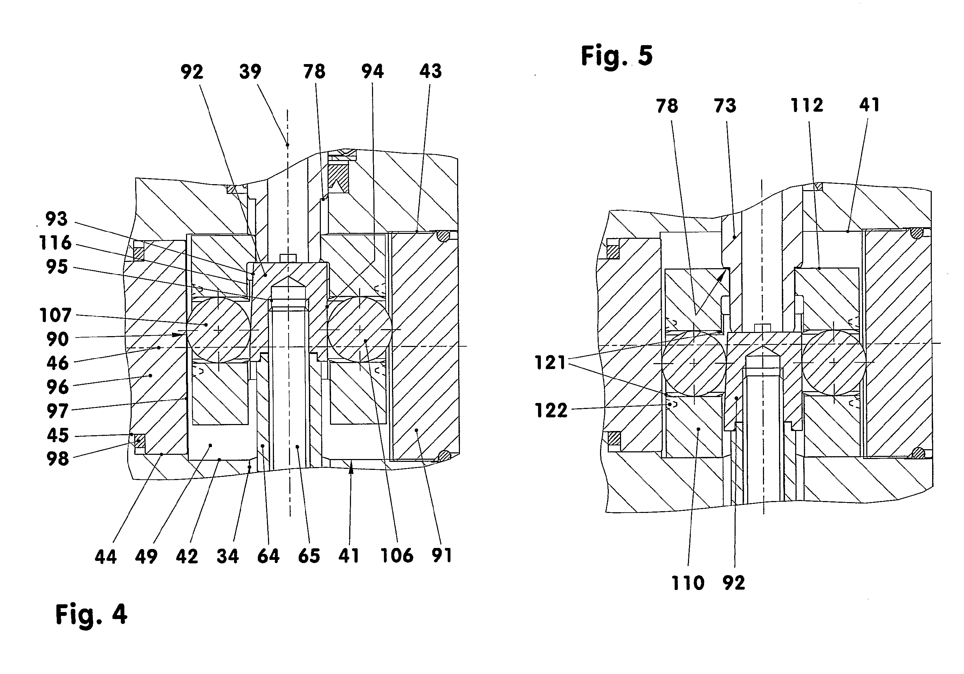

An jeder Stirnseite (113) des Käfigs (110) befinden sich z.B. am seitlichen Rand des Durchgangskanals (115) beispielsweise zwei kerbenförmige Rastausnehmung (122), vgl. auch Figur 5. Im Bereich einer jeden Rastausnehmungen (122) befindet sich eine Rastnase (121), die wenige Zehntel Millimeter in den Durchgangskanal (115) hineinragt. Zumindest vergleichbare Rastnasen (121) befinden sich - nach den Figuren 8 bis 10 - an den durch das Durchdringen des Durchgangskanals (115) und der Schiebekeilausnehmung (116) entstandenen Kanten. Durch diese Rastnasen (121) werden die Zylinderrollen (106, 107) verliersicher im noch nicht in die Vorrichtung eingebauten Käfig (110) gehalten.

Ähnliche Rastnasen können auch in der Schiebekeilausnehmung (116); z.B. im Bereich der durch den Schnitt der Schiebekeilausnehmung (116) mit der Frontseite (111) entstandenen Durchdringungskurve; angeordnet werden. Mit diesen Rastnasen kann dann der Schiebekeil (92) ebenfalls verliersicher im noch nicht in die Vorrichtung eingebauten Käfig (110) positioniert werden.

Der Schiebekeil (92) ist ein trapezförmiger Körper mit einem in Längsrichtung - also parallel zur Mittellinie (39) - veränderlichen, rechteckigen Querschnitt, vgl. Figur 4, und einer nahezu zentralen Gewindebohrung (95). Die Gewindebohrung ist hier eine Sacklochbohrung. Der Schiebekeil (92) ist nach den Figuren 2, 4 und 5 starr, z.B. mittels einer - in die Gewindebohrung (95) eingeschraubten - Schraube (65) an einem in der Federspeicherbohrung (23) gelagerten Primärkolben (63) befestigt. Der Schiebekeil (92) hat u.a. eine Stütz- (94) und eine Keilfläche (93). Beide Flächen sind rechteckig und z.B. plan. Die jeweils dem Druckstück (96) zugewandte Keilfläche (93) schließt mit diesem z.B. einen spitzen Winkel von 1 bis 5 Winkelgraden ein. Hier beträgt der Winkel 2,9 Winkelgrade. Die Stützfläche (94) verläuft parallel zur Stirnfläche der benachbarten Einstellschraube (91). Beispielsweise verjüngen sich die Querschnitte des Schiebekeils (92) linear mit zunehmendem Abstand weg von der Kolbenstangenseite des Primärkolbens (63).

Der Primärkolben (63) besteht aus einer Scheibe, die eine zentrale Bohrung und eine umlaufende einen Dichtring aufnehmende Ringnut aufweist. Er ist geführt in der Federspeicherbohrung (23), die den Zylinder der primären Zylinder-Kolben-Einheit (60) darstellt. Zwischen dem Primärkolben (63) und dem Deckel (51) lagert mindestens ein Federelement (52), das mit Vorspannung auf die Kolbenbodenseite des Primärkolbens (63) wirkt. In den Figuren 1 und 3 werden als Federelement jeweils eine Schraubendruckfeder (52) dargestellt. Ggf. kann im Innenraum dieser Feder (52) eine im Durchmesser kleinere zweite Schraubendruckfeder mit z.B. entgegengesetzter Steigung angeordnet sein. In dieser kann zusätzlich eine dritte Schraubendruckfeder positioniert werden. Auch kann anstelle des Federelements (52) zur Bildung eines Federspeichers eine Tellerfedersäule, ein Tellerfederpaket oder eine Kombination von beidem angeordnet werden.

An der dem Primärkolben (63) abgewandten Stirnseite des Schiebekeils (92) liegt die hohle Kolbenstange (73) eines Sekundärkolbens (71) an. Letzterer gehört zur zweiten Zylinder-Kolben-Einheit (70), deren Zylinder die Zylinderflächenbohrung (77) bildet. Der wirksame Durchmesser des Sekundärkolbens (71) beträgt z.B. 90% des wirksamen Primärkolbendurchmessers. Der Sekundärkolben (71) weist an seiner Bodenseite eine Eindrehung (72) auf, deren Querschnitt etwas größer ist als der Querschnitt der Kolbenstange (73).

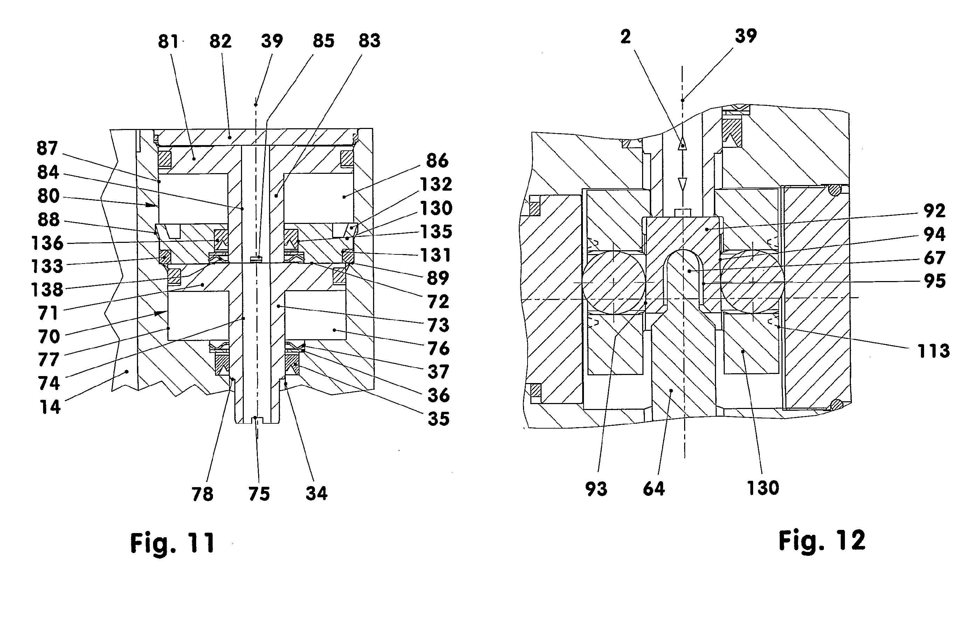

Die Kolbenstange (73) ist hier am Sekundärkolben (71) angeformt. Ihre zentrale Durchgangsbohrung (74) verbindet die Kolbenbodenseite des Kolbens (71) mit der freien Stirnfläche der Kolbenstange (73). Der Durchmesser der Durchgangsbohrung (74) beträgt nach Figur 11 beispielsweise 5 mm. Der Durchmesser entspricht ca. der Hälfte des Außendurchmessers der Kolbenstange (83). Die Sekundärkolbenstange (73) weist an dieser Stirnfläche mindestens eine Quernut (75) auf, deren Querschnitt z.B. zwei Quadratmillimeter beträgt. Ggf. sind in die Stirnfläche mehrere Quernuten eingefräst.

Gegenüber dem Keilgetrieberaum (49) ist der Druckraum (76) mit einem in der Verbindungsbohrung (34) angeordneten Nutring (35) abgedichtet. Die Dichtlippen des Nutrings (35) sind hierbei in Richtung des Keilgetrieberaumes (49) hin orientiert. Der Nutring (35) ist in der zum Zylinderraum (76) hin sich abgestuft aufweitenden Verbindungsbohrung (34) mit Hilfe einer Unterlegscheibe (36) und eines Spreizringes (37) axial gesichert.

Der Druckraum (76) der sekundären Zylinder-Kolben-Einheit (70) wird kolbenbodenseitig mit einem Trennboden (130) verschlossen. Letzterer sitzt in einer an die Zylinderflächenbohrung (77) über einen Bund (89) anschließende Zylinderflächenbohrung (87) der tertiären Zylinder-Kolben-Einheit (80).

Der Trennboden (130) ist im Wesentlichen eine Scheibe mit einer zentralen Bohrung (135), die die Kolbenstange (83) der tertiären Zylinder-Kolben-Einheit (80) durchdringt. Er hat an seiner zylindrischen Außenfläche zum einen einen absatzartigen Einstich (131), der an die Stirnseite heran ragt, die dem Druckraum (76) zugewandt ist. Zum anderen weist er dort drei oder mehr - in speziellen Ausnehmungen angeordnete - Rastzungen (132) auf. Die Rastzungen (132) stehen in radialer Richtung über die zylindrische Außenfläche ca. 0,8 mm über. Gegenüber der Mittellinie (39) nimmt ihre Abspreizrichtung einen Winkel von ca. 20 Winkelgraden ein.

In der Zylinderflächenbohrung (87) liegt der Trennboden (130) über einen im Einstich (131) angeordneten Dichtring (133) am Bund (89) an. In dieser Position wird er axial gehalten durch die Rastzungen (132), die sich in einer Ringnut (88) der Zylinderflächenbohrung (87) abstützen.

Die Bohrung (135) hat mehrere Abstufungen, deren Durchmesser sich in Richtung des Druckraumes (76) stufenweise vergrößern. Der kleinste Durchmesser der Bohrung (135) ist geringfügig größer als der Außendurchmesser der Kolbenstange (83). In der mittleren Abstufung sitzt ein Nutring (136) mit zwei Dichtlippen, wobei die innere Dichtlippe an der Kolbenstange (83) anliegt, während die äußere Dichtlippe die Wandung der Bohrung statisch kontaktiert. Die Dichtlippen sind in Richtung des Druckraumes (76) ausgerichtet. In der dritten Abstufung sitzt vor dem Nutring (136) eine Unterlagscheibe, die durch einen Spreizring (138) gehalten wird.

Der Druckraum (86) der tertiären Zylinder- Kolben-Einheit (80) ist kolbenbodenseitig mit einem Schraubdeckel (82) verschlossen. Der Tertiärkolben (81) hat den gleichen Aufbau wie der Sekundärkolben (71). Seine Kolbenstange (83) hat eine zentrale - auch den Kolben (81) durchdringende - Durchgangsbohrung (84). Der Durchmesser der Bohrung (74) entspricht dem der Bohrung (84). Der wirksame Durchmesser des Tertiärkolbens (81) ist vergleichbar mit dem des Primärkolbens. Auch die Tertiärkolbenstange (83) weist an ihrer Stirnfläche mindestens eine Quernut (85) auf. Ihr Querschnitt entspricht dem der Quernut (75).

Alle Kolben haben in ihrer zylindrischen Umfangsfläche eine Ringnut, in der jeweils mindestens ein Dichtring gelagert ist.

Die Kolbenböden haben, sofern sie an planen Flächen anliegen, zumindest radiale Kerben bzw. Nuten, um einströmendes Druckmittel schnell auf die gesamte aktive Kolbenfläche wirken lassen zu können. Zur Minimierung der trägen Kolbenmasse können die Kolben an ihren Stirnflächen entsprechende Eindrehungen haben.

Als Alternative für die angeformten Kolbenstangen (73, 83) der Kolben (71, 81) kann auch eine - beide Kolben (71, 81) verbindende - Kolbenstange verwendet werden, auf der z.B. die Kolben mittels Gewinde aufgeschraubt sind. Es ist auch denkbar, die Kolbenstange (83) mit dem Sekundärkolben (71) aus einem Stück zu fertigen, den Trennkolben (130) auf diese angeformte Kolbenstange aufzuschieben und abschließend den Tertiärkolben (81) auf letzteren aufzuschrumpfen.

Die Figur 12 zeigt ein Schiebekeilgetriebe mit einem Schiebekeil (92), bei dem sowohl die Keilfläche (93) als auch die Stützfläche (94) gegenüber der Mittellinie (39) einen z.B. gleich großen Winkel von jeweils beispielsweise 1,5 Winkelgraden einschließt. Bei jedem Hub des Schiebekeils (92) verlagert sich dieser konstruktionsbedingt quer zur Mittellinie (39). Um diese Querbewegung zu ermöglichen, ist hier der Schiebekeil (92) von der Kolbenstange (64) getrennt gelagert. Der Schiebekeil (92) hat dazu eine Bohrung (95) mit einem z.B. halbkugelförmigen Grund. An diesem Grund liegt die Kolbenstange (64) mit ihrem Endzapfen (67), dessen freie Stirnseite halbkugelförmig gekrümmt ist, an. Bei jedem Hub des Schiebekeils (92) stellt sich der Kolben (63), zusammen mit der Kolbenstange (64) - durch seine Abrollbewegung im halbkugelförmigen Grund - in der Federspeicherbohrung (23) geringfügig schräg.

Selbstverständlich kann der Endzapfen (67) auch weggelassen werden. In diesem Fall liegt die Kolbenstange (64) plan auf der ihr zugewandten - ebenfalls planen - Stirnfläche des Schiebekeils (92) an. Während der Längshubbewegung des Schiebekeils (92) - also bei einer Bewegung in Führungslängsrichtung (2) - gleitet der Schiebekeil (92) quer dazu entlang der planen Stirnfläche der Kolbenstange (64).

Bei der Montage wird pro Gehäusezone (11, 12) zunächst das Druckstück (96) mit seinem Rückhubring (98) von der seitlichen Außenwandung (19) aus in die Gehemmebohrung (41) eingesetzt. Danach wird der Käfig (110) mit eingelegten Zylinderrollen (106, 107) und dem Schiebekeil (92) in die Gehemmebohrung (41) eingeschoben. Abschließend wird die Gehemmebohrung (41) mittels des Druckstücks (96) verschlossen.

In einem zweiten Schritt wird der Primärkolben (63) zusammen mit der Kolbenstangenhülse (64) und der Schraube (65) in die Federspeicherbohrung (23) eingesetzt und von dort aus in die Verbindungsbohrung (34) eingefädelt. Sobald die Kolbenstangenhülse (64) an der Öffnung der Gewindebohrung (95) des Schiebekeils (92) anliegt, werden die Teile über die Schraube (65) miteinander fest verbunden. Anschließend wird in die Federspeicherbohrung (23) das Federelement (52) eingelegt. Nun wird die Federspeicherbohrung (23) mit dem Deckel (51) verschlossen.

In einem dritten Schritt wird der Sekundärkolben (71) in die Zylinderflächenbohrung (77) eingesetzt. Dabei durchdringt die Kolbenstange (73) den Nutring (35) und kommt am Schiebekeil (92) zur Anlage. In einem vierten Schritt wird der Trennboden (130) so weit in die Zylinderflächenbohrung (87) eingeschoben, bis dessen Rastzungen (132) in der Ringnut (88) einrasten, vgl. Figur 11.

In einem fünften Schritt wird der Tertiärkolben (81) in die Zylinderflächenbohrung (87) eingeschoben. Die Kolbenstange (83) des Tertiärkolbens (81) durchdringt den Nutring (136) des Trennbodens (130) und kontaktiert hierbei den Sekundärkolben (71). Die Zylinderflächenbohrung (87) wird mit dem Schraubdeckel (82) verschlossen.

Durch den Quereinbau des Käfigs (110) liegt zwischen der Gehemmebohrung (41) und der benachbarten Federspeicherbohrung (23) bzw. Zylinderflächenbohrung (77) jeweils nur die Verbindungsbohrung (34). Da Letztere einen relativ kleinen Durchmesser hat, z.B. 11 mm, ist das Gehäuse (10) im Bereich der Gehäusezonen (11, 12) besonders formsteif.

Nach dem Einbau der Vorrichtung in die Werkzeugmaschine wird die Position der Druckstücke (96) durch ein Verdrehen der Einstellschrauben (91) feinjustiert.

Während des Normalbetriebes befindet sich die Vorrichtung in dem in Figur 1 gezeigten Zustand. Das Federelement (52) bzw. das Federsystem des Federspeicherantriebs (50) ist gespannt. Der Schiebekeil (92) befindet sich in seiner hinteren Position, vgl. Figur 5, so dass das Reibgehemme (90) nicht betätigt ist. Die Wälzkörper (106, 107) sitzen spielfrei und nahezu unbelastet im Käfig (110). Der Rückhubring (98) drückt das Druckstück (96) - entgegen der Wirkung der Druckluft im Keilgetrieberaum (49) - in Richtung der Einstellschraube (91). Der Geräteschlitten (9) kann sich entlang der Führungsschiene (1) ungebremst bewegen.

Um das zu gewährleisten, sind der Sekundärkolben (71) und der Tertiärkolben (81) bodenseitig permanent mit Druckluft beaufschlagt, so dass der Sekundärkolben (71) mit seinem an der Kolbenstange (73) vorhandenen Anschlagbund (78) an der Rückseite (112) des Käfigs (110) anliegt, vgl. Figur 5. Der Käfig (110) stützt sich hierbei an der Wandung der Gehemmebohrung (41) ab. Am Primärkolben (63), an dem das Federelement (52) gespannt anliegt, steht über die Gehemmebohrung (41) kolbenstangenseitig Druckluft an. Somit spannen alle drei Kolben das Federelement (52).

Fällt nun an den Kolben (63, 71, 81) die zum Halten des Federelements (52) notwendige Druckluft ab, unabhängig davon, ob eine Systemstörung vorliegt, ein Bremsvorgang eingeleitet werden soll oder ob nur der Schlitten festgeklemmt oder geparkt werden soll, schiebt die jeweilige Schraubendruckfeder (52) den Schiebekeil (92) über den entsprechenden federbelasteten Primärkolben (63) in die Gehemmebohrung (41) hinein, vgl. Figur 4. Der Schiebekeil (92) schiebt dabei die Kolben (71, 81) über ihre Kolbenstangen (73, 83) vor sich her. In der Gehemmebohrung (41) drückt der jeweilige Schiebekeil (92) mit zunehmendem Hub das jeweilige Druckstück (96) gegen die Führungsschiene (1). Die außen liegende Zylinderrolle (106) stützt den Schiebekeil (92) an der Einstellschraube (91) ab, während die Zylinderrolle (107) das Druckstück (96) gegen den Widerstand des Rückhubringes (98) in die Umgriffsnut (14) schiebt. Die Zylinderrollen (106, 107) wälzen nun zwischen den Bauteilen (91, 92, 96) so lange ab, bis sich im Ausführungsbeispiel ein Kräftegleichgewicht zwischen der Federkraft des Gehäuses (10) und der Federkraft des Federelements (52) eingestellt hat. Dann haben die beiden Reibgehemme (90) ihre maximale Klemmkraft erreicht. Die Druckstücke (96) liegen an der Führungsschiene (1) an.

In dieser Position, vgl. u.a. Figur 4, liegt der Schiebekeil (92) mit der Stirnfläche, die der Sekundärkolbenstange (73) zugewandt ist, am Grund der Schiebekeilausnehmung (116) des Käfigs (110) an. Somit wird der Käfig (110) stets zwischen seinen beiden Endlagen zwangsgeführt.

Die Federspeicherbohrung (23) hat eine Druckluftzuführbohrung (29), die sich vor der kolbenbodenseitigen Rückseite des Primärkolbens (63) befindet. Wird diese Bohrung (29) mit Druckluft beaufschlagt, wird der Brems- bzw. Klemmvorgang beschleunigt und die Klemmkraft vergrößert. Selbstverständlich besteht auch die Möglichkeit in der Federspeicherbohrung (23) auf das Federelement (52) bzw. auf ein mechanisches Federsystem zugunsten eines pneumatischen oder hydraulischen Antriebs, z.B. mittels des Primärkolbens (63), zu verzichten.

### Bezugszeichenliste:

- 1: Führungsschiene, doppeltrapezförmig
- 2: Führungslängsrichtung, Mittellinie
- 3: Mittenlängsebene, vertikal,
- 7: Bodenfläche
- 8: Maschinenbett
- 9: Geräteschlitten

- 10: Gehäuse
- 11: Gehäusezone, rechts
- 12: Gehäusezone, links
- 13: Flanschzone
- 14: Umgriffsnut
- 17: Befestigungsbohrungen für (10)
- 18: Innenwandung, seitlich
- 19: Außenwandung, seitlich

- 21: Stirnflächen, Stirnseite, federseitig
- 22: Stirnflächen, Stirnseite
- 23: Federspeicherbohrung
- 24: Quetschring
- 29: Druckluftzuführbohrung, Bohrung

- 34: Verbindungsbohrung
- 35: Nutring, Dichtring
- 36: Unterlegscheibe
- 37: Spreizring, Zackenring
- 39: Mittellinie

- 41: Gehemmebohrung, Gehäusebohrung
- 42: Hauptbohrung
- 43: Feingewinde
- 44: Druckstückführungsbohrung
- 45: Austrittsbohrung
- 46: Mittellinie
- 49: Keilgetrieberaum

- 50: Federspeicherantrieb
- 51: Deckel
- 52: Federelement, Schraubendruckfeder, Feder

- 60: Zylinder-Kolben-Einheit, primär; pneumatischer Antrieb
- 63: Primärkolben
- 64: Kolbenstangenhülse, Kolbenstange, Schubstange
- 65: Schraube
- 67: Endzapfen

- 70: Zylinder-Kolben-Einheit, sekundär; pneu. Antrieb
- 71: Sekundärkolben
- 72: Eindrehung
- 73: Sekundärkolbenstange, Kolbenstange
- 74: Durchgangsbohrung
- 75: Quernut
- 76: Druckraum
- 77: Zylinderflächenbohrung
- 78: Anschlagbund

- 80: Zylinder-Kolben-Einheit, tertiär; pneu. Antrieb
- 81: Tertiärkolben
- 82: Schraubdeckel
- 83: Tertiärkolbenstange, Kolbenstange
- 84: Durchgangsbohrung, zentral
- 85: Quernut
- 86: Druckraum
- 87: Zylinderflächenbohrung
- 88: Ringnut
- 89: Bund von (87)

- 90: Reibgehemme
- 91: Einstellschraube
- 92: Schiebekeil
- 93: Keilfläche
- 94: Stützfläche
- 95: Gewindebohrung
- 96: Druckstück
- 97: Stirnfläche
- 98: Rückhubring, elastisch

- 106: Zylinderrolle, außen liegend; Wälzkörper
- 107: Zylinderrolle, innen liegend; Wälzkörper

- 110: Käfig
- 111: Frontseite
- 112: Rückseite
- 113: Stirnseiten
- 115: Durchgangskanal
- 116: Schiebekeilausnehmung
- 117: Querbohrung
- 118: Fenster
- 119: Käfigmittenlängsebene

- 121: Rastnasen
- 122: Rastausnehmungen

- 130: Trennboden
- 131: Einstich
- 132: Rastzungen
- 133: Dichtring
- 135: Bohrung, gestuft
- 136: Nutring, Dichtring
- 138: Spreizring, Zackenring

## Patentansprüche

1. Brems- und/oder Klemmvorrichtung zur Anbringung an einem mittels mindestens einer Führungsschiene (1) geführten Schlitten (9), wobei die Vorrichtung ein Gehäuse (10), mindestens ein Scniebekeilaetriebe (92, 107, 96.), mindestens einen Wälzkörper (106) und mindestens einen Käfig (110) pro Schiebekeilgetriebe (92, 107, 96) aufweist,
- wobei die Vorrichtung mindestens ein über das ein Schiebekeilgetriebe (92, 107, 96) betätigbares Reibgehemme (90) umfasst, das wenigstens ein in dem einem Gehäuse (10) gelagertes, an die Führungsschiene (1) anpressbares Druckstück (96) aufweist,
- wobei das Schiebekeilgetriebe (92, 107, 96) zur Belastung des Reibgehemmes (90) mittels Federkraft und/oder pneumatischer oder hydraulischer Druckkraft in eine Richtung und zur Entlastung mittels der pneumatischen oder hydraulischen Druckkraft von mindestens einem Kolben (63, 71, 81) in die entgegengesetzte Richtung beweglich ist,
- wobei der oder die Kolben (63, 71, 81) in mindestens einer mehrstufigen Durchgangsbohrung (23, 34, 77, 87) des Gehäuses (10) angeordnet sind, deren Mittellinie (39) parallel zur Führungslängsrichtung (2) orientiert ist,
- wobei der Schiebekeil (92) des Schiebekeilgetriebes (92, 107, 96) über den mindestens einen Wälzkörper (106) auf das Druckstück (96) wirkt,
- wobei der oder die Wälzkörper (106) in dem einem - in der Führungslängsrichtung (2) des oder der Kolben (63, 71, 81) verschiebbaren - Käfig (110) gelagert sind,
**dadurch gekennzeichnet**,
- dass der Käfig (110) in eine quer zur Führungslängsrichtung (2) ausgerichteten Gehäusebohrung (41) - durch Einschieben in diese - montierbar ist, die von einer Verbindungsbohrung (34), die Teil der Durchgangsbohrung (23, 34, 77, 87) ist, geschnitten oder gekreuzt wird und
- dass die Verbindungsbohrung (34) einen Durchmesser hat, der kleiner ist als 30% des Durchmessers einer Federspeicherbohrung (23), die Teil der Durchgangsbohrung (23, 34, 77, 87) ist.

2. Vorrichtung gemäß Anspruch 1, **dadurch gekennzeichnet, dass** im Käfig (110) der Schiebekeil (92) des Schiebekeilgetriebes (92, 107, 96) zwischen einer Schubstange eines Federspeicherantriebs (50) und der Kolbenstange (73) mindestens eines pneumatischen oder hydraulischen Antriebs (70, 80) eingespannt ist.

3. Vorrichtung gemäß Anspruch 2, **dadurch gekennzeichnet, dass** die Schubstange des Federspeicherantriebs (50) eine Kolbenstange (64) eines Kolbens (63) ist, wobei sich das Federelement (52) des Federspeicherantriebs (50) an der Bodenseite des Kolbens (63) abstützt.

4. Vorrichtung gemäß Anspruch 2, **dadurch gekennzeichnet, dass** der Käfig (110) in der einen Endlage am Schiebekeil (92) und in der anderen Endlage an der Kolbenstange (73) anliegt.

5. Vorrichtung gemäß Anspruch 1, **dadurch gekennzeichnet, dass** die Kolbenstangen (73, 83) der Kolben (71, 81) fluchtende Durchgangsbohrungen (74, 84) haben.

6. Vorrichtung gemäß Anspruch 4, **dadurch gekennzeichnet, dass** an den freien Enden der Kolbenstangen (73, 83) der Kolben (71, 81) jeweils mindestens eine Quernut (75, 85) eingearbeitet ist, die sich mit der entsprechenden Durchgangsbohrung (74, 84) schneidet bzw. diese durchdringt.

7. Vorrichtung gemäß Anspruch 1, **dadurch gekennzeichnet, dass** in dem Gehäuse (10) zwei Reibgehemme (90) und diese betätigende Schiebekeilgetriebe (92, 107, 96) spiegelsymmetrisch zu einer Gehäusemittenlängsebene (3) angeordnet sind.

## Claims

1. Braking and/or clamping apparatus for attachment to a slide (9) guided by at least one guide rail (1), with
- the apparatus comprising a housing (10), at least one wedge shifting transmission (92, 107, 96), at least one rolling-contact member (106) and at least one cage (110) per wedge shifting transmission (92, 107, 96),
- the apparatus further comprising at least one frictional restraining means (90) actuatable via wedge shifting transmission (92, 107, 96) and having at least one pressing member (96) mounted inside housing (10) and adapted to be urged onto guide rail (1),
- said wedge shifting transmission (92, 107, 96) being movable in one direction by means of spring force and/or pneumatic or hydraulic compressive force for loading frictional restraining means (90), and being movable for relief in the opposite direction through pneumatic or hydraulic compressive force by means of at least one piston (63, 71, 81),
- said piston or pistons (63, 71, 81) being disposed in at least one multiply stepped through-bore (23, 34, 77, 87) of housing (10), with the center line (39) of said through-bore oriented in parallel with the longitudinal guidance direction (2),
- the shifting wedge (92) of wedge shifting transmission (92, 107, 96) acting upon pressing member (96) through said at least one rolling-contact member (106), and
- said rolling-contact member or members (106) mounted inside the cage (110), said cage movable in the longitudinal guidance direction (2) of the piston or pistons (63, 71, 81),
**characterized in that**
- the cage (110) is adapted to be mounted in a housing bore (41) aligned transversely of the longitudinal guidance direction (2) by being pushed thereinto, said housing bore (41) intersected or crossed by a connecting bore (34) which is a part of through-bore (23, 34, 77, 87), and
- the connecting bore (34) has a diameter smaller than 30 % of the diameter of a spring storage bore (23), which latter bore is a part of through-bore (23, 34, 77, 87).

2. Apparatus as claimed in claim 1, **characterized in that** shifting wedge (92) of wedge shifting transmission (92, 107, 96) is restrained between a push rod of spring storage drive means (50) and the piston rod (73) of at least one pneumatic or hydraulic drive means (70, 80).

3. Apparatus as claimed in claim 2, **characterized in that** the push rod of spring storage drive means (50) comprises the piston rod (64) of a piston (63), with spring element (52) of said spring storage drive means (50) resting on and supported by the bottom of piston (63).

4. Apparatus as claimed in claim 2, **characterized in that** cage (110) engages shifting wedge (92) in its one end position and piston rod (73) in its other end position.

5. Apparatus as claimed in claim 1, **characterized by** aligned through-bores (74, 84) extending through the piston rods (73, 83) of pistons (71, 81).

6. Apparatus as claimed in claim 4, **characterized in that** the free ends of piston rods (73, 83) of pistons (71, 81) each have at least one transverse groove (75, 85) worked therein, said transverse groove(s) intersecting or penetrating the corresponding through-bores (74, 84).

7. Apparatus as claimed in claim 1, **characterized in that** housing (10) accommodates a pair of frictional restraining means (90) and wedge shifting transmissions (92, 107, 96) actuating said means (90), said frictional restraining means disposed in a mirror-symmetry relationship to a central longitudinal plane (3) of said housing.

## Revendications

1. Dispositif de freinage et/ou de serrage, destiné à Etre monté sur un chariot (9) guidé par au moins un rail de guidage (1),
- le dispositif présentant un boîtier (10), au moins un engrenage à clavette coulissante (92, 107, 96) au moins un corps roulant (106) et au moins une cage (110) pour chaque engrenage à clavette coulissante (92, 107, 96),
- le dispositif comportant au moins un patin à friction (90)qui peut être actionné par l'engrenage à clavette coulissante (92, 107, 96) et qui présente au moins une pièce d'appui (96) logée dans le boîtier (10) et apte à être pressée contre le rail de guidage (1),
- l'engrenage à clavette coulissante (92, 107, 96) pouvant être déplacé dans une direction, pour charger le patin à friction (90), grâce à la force de tension d'un ressort et/ou par force de pression pneumatique ou hydraulique, et dans la direction opposée, pour relâcher cette tension, par la force de pression pneumatique ou hydraulique d'au moins un piston (63, 71, 81),
- le piston ou les pistons (63, 71, 81) étant placé(s)dans au moins un perçage traversant (23, 34, 77, 87) à plusieurs niveaux du boîtier (10) dont la ligne médiane (39) est orientée parallèlement au sens longitudinal(2),
- la clavette coulissante (92) de l'engrenage à clavette coulissante (92, 107, 96)agissant sur la pièce d'appui (96) par l'intermédiaire d'au moins un corps roulant,
- le ou les corps roulant(s) (106) étant logé(s) dans la cage (110) qui peut être déplacée dans le sens longitudinal (2) du ou des piston(s) (63, 71, 81),
caractérisé en ce
- que la cage (110) peut être montée dans un perçage du boîtier (41) orienté transversalement au sens longitudinal (2), par insertion dans ce perçage qui est recoupé ou croisé par un perçage de liaison (34) qui fait partie du perçage traversant (23, 34, 77, 87 et
- que le perçage de liaison (34) a un diamètre inférieur à 30% du diamètre du perçage d'un accumulateur à ressort (23) qui fait partie du perçage traversant (23, 34, 77, 87).

2. Dispositif selon la revendication 1, **caractérisé en ce que** la clavette coulissante (92) de l'engrenage à clavette coulissante (92, 107, 96) dans la cage (110) est enserrée entre la tige de poussée d'un entraînement à ressort accumulateur (50) et la tige de piston (73) d'au moins un entraînement pneumatique ou hydraulique (70, 80).

3. Dispositif selon la revendication 2, **caractérisé en ce que** la tige de poussée de l'entraînement à ressort accumulateur (50) est la tige (64) d'un piston (63), l'élément ressort (52) de l'entraînement à ressort accumulateur (50) s'appuyant contre le côté inférieur du piston (63).

4. Dispositif selon la revendication 2, **caractérisé en ce que**, dans une position de fin de course, la cage (110) est en contact avec la clavette coulissante (92) et dans l'autre position de fin de course, la cage est en contact avec la tige de piston (73).

5. Dispositif selon la revendication 1, **caractérisé en ce que** les tiges (73, 83) des pistons (71, 81) présentent des perçages traversants alignés (74, 84).

6. Dispositif selon la revendication 4, **caractérisé en ce que** chaque extrémité libre des tiges (73, 83) des pistons (71, 81) présente au moins une rainure transversale (75, 85) qui croise le perçage traversant (74, 84) correspondant ou qui traverse celui-ci.

7. Dispositif selon la revendication 1, **caractérisé en ce que** deux patins à friction (90) et des engrenages à clavette coulissante (92, 107, 96) qui actionnent ces patins à frictions ont disposés en symétrie-miroir par rapport à un plan médian longitudinal (3) du boîtier.
